# EUROPÄISCHE PATENTSCHRIFT

(11) **EP 1 516 516 B1**
(45) Veröffentlichungstag und Bekanntmachung des Hinweises auf die Patenterteilung: **08.02.2006**
(21) Anmeldenummer: 03735463.6
(22) Anmeldetag: 26.05.2003
(51) Int. Cl.: H05B 3/74

(54) **KOCHSYSTEM MIT DIREKT BEHEIZTER GLASKERAMIKPLATTE**
COOKING SYSTEM COMPRISING A DIRECTLY HEATED GLASS-CERAMIC PLATE
SYSTEME DE CUISSON A PLAQUE VITROCERAMIQUE CHAUFFEE DIRECTEMENT

(30) Priorität: 06.06.2002 DE 10225337
(43) Veröffentlichungstag der Anmeldung: 23.03.2005
(73) Patentinhaber: Schott AG, 55122 Mainz (DE)
(72) Erfinder: WERMBTER, Karsten, 55257 Budenheim (DE); NASS, Peter, 55120 Mainz (DE); KLIPPE, Lutz, 65187 Wiesbaden (DE)
(74) Vertreter: Fleck, Hermann-Joseph
(86) Internationale Anmeldenummer: PCT/EP2003/005493
(87) Internationale Veröffentlichungsnummer: WO 2003/105531

(56) Entgegenhaltungen:
- EP-A- 0 951 202
- EP-A- 0 967 838
- DE-C- 19 900 178
- DE-U- 20 114 002
- US-A- 6 037 572

## Beschreibung

Die Erfindung betrifft ein Kochsystem, das auf dem Prinzip der Wärmeleitung basiert und eine einstückige Kochfläche aus Glaskeramik umfasst, die mindestens eine Kochzone aufweist, die mittels auf der Unterseite der Glaskeramikplatte angeordneten Heizelementen individuell direkt beheizbar ist.

Kochsysteme zum Garen von Speisen bestehen aus einer eben angeordneten Kochfläche, auf der sich das Behältnis zum Garen befindet. Unterhalb der Kochfläche ist die Beheizung angebracht, wobei unterschiedliche Funktionsprinzipien der Wärmeübertragung genutzt werden. Ein optimal abgestimmtes Kochsystem weist einen flächigen Kontakt zwischen dem Topfboden und der Kochfläche auf, damit die Übertragung der Kontaktwärme möglichst verlustarm geschieht. Alle in Kontakt stehenden Flächen sollten im Heißzustand möglichst planparallel zueinander angeordnet sein. Der Temperaturgradient zwischen dem Heizelement und dem Gargut muss ausreichend groß sein, um einen schnellen Aufheizvorgang zu ermöglichen. Die Wärmeverluste an die Umgebung sollten minimiert sein, was durch eine entsprechende Isolation des Heizelementes erreicht werden kann. Das Heizelement sollte unter Einhaltung der elektrischen Normen in möglichst geringem Abstand zum Gargut, also direkt unterhalb der Kochfläche, angeordnet sein.

Bei konventionellen Systemen mit Kochplatten aus Gusseisen wird die Energie überwiegend nach dem Prinzip der Wärmeleitung übertragen. Die Heizquelle besteht hierbei aus elektrisch isolierten Heizwendeln aus Widerstandsdraht im Inneren der Kochplatte. Die einzelnen Kochplatten sind in eine meist metallische Kochfläche eingesetzt. Die Gusskochplatte ist oberhalb der Kochfläche angeordnet und gleitet aufgrund der thermischen Dehnung, beim Kochvorgang auf der Oberfläche der Trägerplatte. Auf diese Art wird eine thermische und mechanische Entkopplung der Bauteile erreicht. Durch ihren massereichen Aufbau sind diese Systeme sehr träge im Ankochverhalten und in ihrer Regelbarkeit.

Eine Weiterentwicklung solcher Kochsysteme wird erzielt durch eine veränderte Anordnung der Heizelemente und eine Materialmodifikation der Kochplatte. Hierbei werden dünne keramische Scheiben mit gute Wärmeleitfähigkeit und hoher mechanischer Festigkeit, vorzugsweise aus nichtoxidischen Keramiken, wie Si₃N₄ oder SiC, als Kochplatte verwendet. Die EP 0 853 444 A2 und die EP 0 069 298 beschreiben keramische Kochsysteme auf Si₃N₄-Basis mit guter Wärmeleitfähigkeit und hoher Planität. Diese bekannten Kochplatten werden in Kochflächen, vorzugsweise aus vorgespanntem Flachglas, aber auch in Stein-platten oder in Platten aus polymerkeramischen Kompositmaterialien eingesetzt. Um eine Erwärmung der gesamten Kochfläche zu erreichen, jedoch mechanischen Spannungen entgegenzuwirken, befindet sich eine Dehnungsfuge zwischen der Keramikplatte und der Kochfläche. Die Verbindung erfolgt mittels hitzebeständiger Kleber. Die elektrische Beheizung erfolgt durch stromdurchflossene metallische Schichten, die in festem Verbund auf der Kochplatte haften. Verwendet werden vollflächige dünne Schichten insbesondere aus SnO₂, wie die US 6,037,5 72, zeigt. Auch werden metallische Folien als Heiz-elemente verwendet, die an das Substrat angepresst oder durch wärmeleitende temperaturbeständige Kleber mit der Keramikplatte verbunden werden. Die normgerechte elektrische Isolation zwischen der Heizung und dem Kochgefäß wird durch die Keramikplatte selbst gewährleistet. Bei Kochplatten aus elek-trisch leitfähigem Material, wie beispielsweise SiC, kann eine keramische Isolationsschicht zwischen der Heizung und der Kochplatte installiert werden, um die elektrische Isolation zu gewährleisten. Der beschriebene Aufbau zeichnet sich insbesondere durch verbesserte Leistungen im Bereich des Ankochens, der Effizienz und der Regelbarkeit aus. Durch den direkten Kontakt von Heizelement, Kochplatte und Topfboden und die hohe Wärmeleitfähigkeit der Keramikplatte kann der Temperaturgradient zwischen der Heizung und dem Topf beim Ankochen erniedrigt werden, ohne dabei die Ankochleistung zu verringern. Die Wärmeverluste werden minimiert, wodurch die Effizienz des Systems steigt. Die Temperaturen der Kochzonenoberseite werden reduziert auf etwa 350° C. Auch wird die Bauhöhe der Kochplatte verglichen mit der Gusskochplatte verkleinert.

Alternativ zu diesen Systemen befinden sich strahlungsbeheizte Systeme auf dem Markt. Die Kochflächen bestehen aus Material mit niedriger Wärmeleitung und Wärmedehnung, wie z. B. Glaskeramikplatten, insbesondere Glaskeramikplatten mit Komponenten aus dem System Li₂O-Al₂O₃-SiO₂, auch bekannt unter dem Namen Ceran®. Unterhalb der einstückigen planen Kochflächen befinden sich Strahlungsheizkörper. Ein stromdurchflossener glühender Widerstandsdraht aus metallischen Legierungen erzeugt hierbei die Heizenergie. Der Energieübertrag erfolgt durch Wärmeleitung und Konvektion, jedoch mit einem Anteil von etwa 40 % durch Wärmestrahlung. Beim Einsatz von Kochgeschirr minderer Qualität existiert während des Kochbetriebs ein Luftspalt zwischen dem Topfboden und der Kochfläche, der den Kontaktwärmeübertrag reduziert. Durch die Kombination von Wärmestrahlung und Wärmeleitung wird einem drastischen Abfall der Ankochleistung entgegengewirkt. Die normgerechte (EN 60335 und UL 858) elektrische Isolation zwischen den Heizkörpern und dem Kochgefäß, bei der beim Betrieb mit 230V ~ eine Spannungsfestigkeit von 3750 V und ein Ableitstrom kleiner 0,25 mA geleistet werden muss, wird durch einen Luftspalt realisiert. Um eine ausreichende Ankochleistung zu erzielen, wird die Heizkörpertemperatur auf Werte um 1100 °C eingestellt, so dass das System auf der Kochzonenoberseite eine maximal mögliche Temperatur von etwa 570° C hat. Der Vorteil derartiger Systeme ist die hohe Ästhetik, die durch die Anmutung der einstückigen planen Kochfläche entsteht. Ein weiterer daraus abzuleitender Vorteil ist die gute Reinigungsfreundlichkeit, ebenso wie die freie Designmöglichkeit über eine Oberflächendekorierung. Durch den masseärmeren Aufbau und die geringe Wärmekapazität der dünnen Glaskeramikplatte wird das Regelverhalten und die Ankochzeit gegenüber der Gusskochplatte verbessert.

Die keramischen Kochsysteme auf der Basis von SiN oder SiC zeichnen sich vor allem durch hohe Leistungsdaten aus. Schnelle Ankochzeiten und Wirkungs-grade von über 80 % werden erreicht. Die technische Lösung verursacht allerdings Abstriche bezüglich der ästhetischen Aspekte und der Reinigungsfreundlichkeit. Die Kochleistüng wird verbessert durch die Verwendung einer Kochplatte mit hoher Wärmeleitfähigkeit. Damit jedoch die Erwärmung lokal auf die Kochzone begrenzt wird, muss eine Wärmebarriere zwischen der Kochzone und der restlichen Kochfläche erreicht werden. Die einstückige Gesamtkochfläche wird dazu mit Bohrungen versehen, in die Keramikscheiben eingeklebt werden. Die Keramikscheiben müssen zudem noch geringfügig aus der Ebene der Kochfläche herausragen, damit sichergestellt ist, dass der Topfboden in jedem Fall auf der keramischen Kochzone aufliegt und kein Luftspalt zur Heizfläche entsteht. Weiterhin ist eine Dehnungsfuge, gefüllt mit Kleber, vorhanden. Die haptischen Eigenschaften der Kochfläche sind dadurch inhomogen und die Rei-nigungsfreundlichkeit sinkt. Eine mit Nahrungsmitteln verschmutzte Kochzone kann durch die abstehenden Keramikscheiben und die Dehnungsfuge mit mechanischem Werkzeug wie Schwa mm oder Schaber nur umständlich gereinigt werden. Die keramische Kochzone unterscheidet sich farblich vom Rest der Kochfläche, die Anmutung ähnelt dem Kochfeld aus Grauguss. Das Design der Kochfläche wird somit unattraktiver.

Strahlungsbeheizte Glaskeramikkochfelder sind einstückig ausgebildet und besitzen dadurch eine hohe optische Anmutung und Reinigungsfreundlichkeit. Störende Kanten und Fugen sind nicht vorhanden. Als nachteilig zu bewerten sind die Leistungen solcher Kochsysteme im Hinblick auf Ankochen, Effizienz und Regelbarkeit im Vergleich zu den Si₃N₄ Kochystemen. Da die Glaskeramikplatten bei Temperaturen ab 250° C elektrisch leitend werden, muss der Heiz-körper mit einem definierten Abstand zur Kochfläche montiert werden, um die nötige Spannungsfestigkeit von 3750 V zu erreichen. Durch den Luftspalt zwischen der Beheizung und der Kochfläche wird das Ankochverhalten und die Regelbarkeit verschlechtert. Es müssen hohe Temperaturen von über 1100 °C am Heizleiter erzeugt werden, um eine ausreichende Ankochleistung zu erzielen. Da die Umgebung der Kochzone vom Heizkörper mit aufgeheizt wird, entstehen Wärmeverluste und die Effizienz des Kochsystems sinkt, verglichen mit kera-mischen SiN-Kochsystemen von etwa 80 % auf 60 %. Der Aufbau mit einem Luftspalt erzeugt eine Mindestbauhöhe, die die Einbaumöglichkeiten in einer Kochmulde beschränkt. Die Komponentenzahl einer Kochmulde mit Heizkörpern inklusive der Fixierung und einer Regelung ist hoch.

Der Aufbau eines optimierten Kochsystems mit einstückiger optisch anmutender Kochfläche und verbesserten Leistungsdaten wird möglich durch die direkte Beheizung einer Glaskeramikkochfläche.

Die EP 0 861 014 A1 beschreibt eine Kochplatte, bei der eine Glaskeramikplatte durch direkt aufgedruckte metallische Leiter beheizt wird. Die zu normgerechten Betrieb zwingend notwendige elektrische Isolationsschicht zwischen der Glaskeramikplatte und dem Heizelement wird hier nicht erwähnt.

Die EP 0 866 641 A2 löst die Aufgabe mit dem Kompromiss, dass eine ein-stückige Glaskeramikplatte verwendet wird, und die Beheizung wie beim Si₃N₄ System leistungssteigernd durch direkt unterseitig angebrachte Heizelemente erfolgt. Die technische Umsetzung wird vollzogen durch das Anpressen oder Kleben einer metallischen Folie, die dann elektrisch beheizt wird. Nachteilig hierbei ist die geringe maximal mögliche Kochtemperatur. Bei eigenen Unter-suchungen hat sich gezeigt, dass ein einfaches Anpressen eines Folienheizelementes eine starke Reduzierung der Ankochleistung hervorruft. Eine chemische Anbindung oder zumindest flächige mechanische Verzahnung ist notwendig. Alle handelsüblichen Kleber mit guter Wärmeleitung verbieten den Einsatz bei Temperaturen größer als 350° C. Temperaturen um 550° C, gemessen am Heizelement, sind jedoch erforderlich, um bei einem Glaskeramiksubstrat mit Direktbeheizung eine Ankochleistung zu erzielen, die zum schnellen Braten von Speisen erforderlich ist. Grund dafür ist die im Vergleich zu SiN Keramik-kochplatten (20-30 W/mK) geringe Wärmeleitfähigkeit von Glaskeramik (1-2 W/mK). Die Temperatur am Heizelement beträgt bei Keramikkochsystemen etwa 400° C. Bei Verwendung von Glaskeramikplatten als Kochplatte sind zum Er-reichen äquivalenter Leistungen Temperaturen um 550° C notwendig. Ein wei-teres Problem ist die unterschiedliche thermische Dehnung von Glaskeramik (etwa O bis 1,5 x 10⁻⁶/K) und Metaltheizelementen (größer 10 x 10⁻⁶/K). Ein bis 550° C stabiler, gut wärmeleitender Kleber mit ausreichender Duktilität zum Ausgleich der Wärmespannungen ist technisch nicht darstellbar.

Ein fester Verbund zwischen dem Heizelement und dem isoliertem Glaskeramiksubstrat erfolgt gemäß eines Aufbaus dadurch, dass sich zwischen der Glaskeramikplatte und der als Schicht aufgebrachten Beheizung eine elektrische Isolationsschicht befindet. Diese besteht vorzugsweise aus elektrisch hoch-isolierenden keramischen Werkstoffen aus dem Stoffsystem Al₂O₃-SiO₂-MgO (Korund, Quarz, Cordierit, Mullit). Die WO 00/15005 beschreibt Möglichkeiten, die Isolationsschichten mit hoher thermischer Dehnung auf den niedrig dehnen-den Substraten abzuscheiden. Auch wenn der Schichtverbund mechanisch stabil ist, besteht jedoch immer noch das grundlegende Problem, dass bei einer Erwärmung des Kochsystems eine Verwölbung der Kochzone auftritt. Diese entsteht durch die unterschiedlichen Dehnungen der Glaskeramikplatte und der lsolationsschicht bzw. Heizschicht (vergleichbar mit einem Bimetalleffekt). Der entstehende Luftspalt zwischen dem Topfboden und der Kochplattenoberseite verkleinert die Kontaktfläche und reduziert den Wärmeübergang erheblich. Die Ankochzeiten verschlechtern sich drastisch.

Die EP 0 951 202 A2 beschreibt ein direkt beheiztes Kochsystem mit einer metallischen Zwischenschicht, die zur Erfüllung der elektrischen Norm geerdet ist. Auftretende Überspannungen oder Kriechströme werden so abgeleitet. Der Aufbau eines solchen Systems ist jedoch technisch schwierig realisierbar und unrentabel.

Es ist Aufgabe der Erfindung, ein elektrisch direkt beheizbares Kochsystem der eingangs erwähnten Art zu schaffen, das bei optischer Anmutung gute Reinigungseigenschaften zeigt. Die Systemleistungen sollen gegenüber konventionellen Kochsystemen mit Beheizung über Strahlungsheizkörper verbessert sein. Die Kochplatte soll segmentindividuelle Heizzonen zum Kochbetrieb beinhalten und eine planparallele Anordnung von Topfböden und Kochplatte im Kochbetrieb bei Temperaturen bis zu 500° C gewährleisten.

Diese Aufgabe wird nach der Erfindung dadurch gelöst, dass die Glaskeramikplatte mit Hauptkristallphasen vom Typ Hochquarzmischkristall oder Keatitmischkristall hauptsächlich aufgebaut aus den Komponenten LiO₂-Al₂O₂-SiO₂, mit einem Ausdehnungskoeffizienten von α = 0 bis 1,8 x 10⁻⁶/K, vorzugsweise von α = 0 bis 1,5 x 10⁻⁶/K, und einer Wärmeleitfähigkeit < 3 W/mK, vorzugsweise < 2,7 W/mK auf der Unterseite mindestens eine Kochzone aufweist, dass die Heizelemente der Kochzonen aus metallischen Schichten bestehen und dass zwischen der Unterseite der Glaskeramikplatte als elektrische Isolationsschicht eine poröse Keramikschicht angeordnet ist.

Bei dieser Ausgestaltung ist die Kochfläche entsprechend den Anforderungen einstückig. An der Unterseite der Glaskeramikplatte können Kochzonen durch die aufgebrachten Heizelemente abgeteilt werden, die mit unterschiedlichen Temperaturen betrieben werden können. Die geringe Wärmeleitfähigkeit der Glaskeramikplatte muss gewählt werden, damit ein Aufheizen der gesamten Kochfläche durch Wärmequerleitung vermieden wird. Außerdem muss die Glaskeramikplatte eine geringe thermische Dehnung aufweisen, damit keine oder nur geringe Wärmespannungen beim Temperaturwechsel entstehen, die zum Bruch der Glaskeramikplatte führen können. All dies wird durch die für die Glaskeramikplatte verwendeten Materialien gewährleistet.

Der Schichtverbund zwischen den Heizelementen und der Untereite der Glaskeramikplatte muss bei Kochtemperaturen bis 500° C an der Oberseite der Glaskeramikplatte die vorgeschriebenen Normen erfüllen. Ist die Glaskeramikplatte elektrisch leitend, dann wird zur elektrischen Isolation zwischen der Unterseite der Glaskeramikplatte und den Heizelementen eine Keramikschicht aus Al₂O₃, Mullit, Cordierit, Zirkonsilikat oder SiO₂/TiO₂ aufgebracht.

Die Materialwahl und das Verfahren zum Aufbringen der Heizelemente ist nach einer Ausgestaltung so vorgenommen, dass die Heizelemente in thermischen Spritzen, insbesondere atmosphärischen Plasmaspritzen, Kaltgasspritzen aus NiCr-Basislegierungen, NiAl-Basislegierungen, CrFeAl-Basislegierungen oder oxidationsbeständigen Cermets, wie Cr₃C₂-NiCr oder WC-CoCr, aufgebracht sind oder dass die Heizelemente im Siebdruckverfahren aus Ag/Pd-haltigen Pasten mit einer Glasfritte aufgebracht sind.

Damit im Heizbetrieb bei Temperaturwechsel die Schichthaftung beständig bleibt, im Material jedoch das Auftreten hoher Wärmespannungen vermieden wird, ist nach einer weiteren Ausgestaltung vorgesehen, dass die Isolationsschicht mittels dünner Stege von Keramikprimärpartikeln mit einer Breite von etwa 50 bis 150 nm an der Unterseite der Glaskeramikplatte angebunden sind.

Zur Verringerung des Wärmeverlustes kann zusätzlich vorgesehen sein, dass die Heizelemente mittels einer thermischen Isolationsschicht aus silikatischem Fasermaterial abgedeckt sind.

Die geforderten Eigenschaften des Kochsystems sind dann dadurch eingehalten, dass die Glaskeramikplatte einen spezifischen Widerstand > 10⁶ Ω cm und das gesamte Kochsystem eine Durchschlagfestigkeit > 3750 V aufweisen, während der Ableiststrom nach der Norm 60335-1 < 0,25 mA pro Kochzone beträgt.

Die Erfindung wird anhand eines in der Zeichnung dargestellten Ausführungsbeispiels näher erläutert. Es zeigen:
- Fig. 1: im Schnitt ein Kochsystem aus Glaskeramikplatte, Keramikschicht, Heizelementen und thermischer Schutzschicht und
- Fig. 2: einen vergrößerten Teilschnitt im Verbundbereich zwischen der Glaskeramikplatte und der Keramikplatte als elektrische Isolationsschicht.

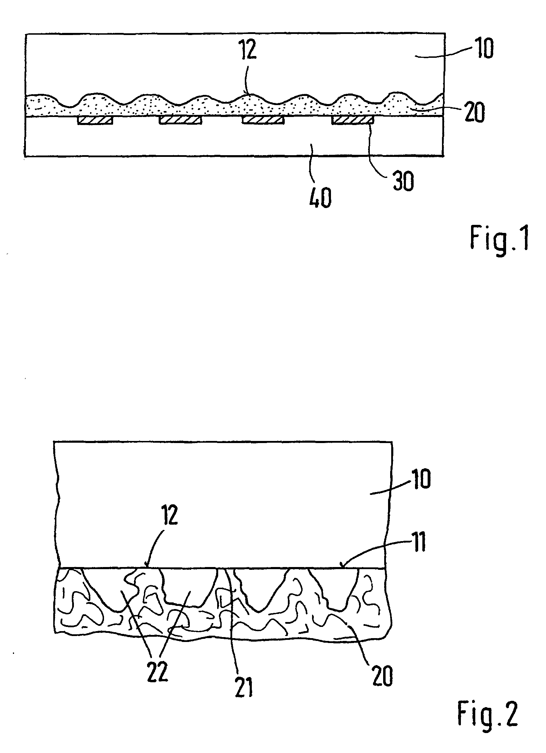

Die Fig. 1 zeigt ein Kochsystem nach der Erfindung. Die Glaskeramikplatte 10 bildet mit ihrer Oberseite die Kochfläche. Auf der Unterseite der Glaskeramikplatte ist zur elektrischen Isolation eine Keramikplatte 20 aufgebracht, die mit der Glaskeramikplatte 10 zur Oberflächenvergrößerung mit Noppen versehen sein kann. Die Schichtdicken liegen zwischen 50 und 350 *µ*m, insbesondere im Bereich von 160 bis 200 *µ*m. Die Isolationsschicht, d.h. die Keramikplatte 20, trägt die Heizelemente 30, welche die Kochzonen bestimmen und die individuell beheizt und geregelt werden können.

Die Ausbildung der Heizelemente kann mit Leiterbahnen oder Flächenheizelementen vorgenommen werden.

Das Material der Glaskeramikplatte hat eine Wärmeleitfähigkeit < 3 W/mK, insbesondere < 2,7 W/mK und ein Ausdehnungskoeffizenten α = 0 bis 1,8 x 10⁻⁶/K, insbesondere α = 0 bis 1,5 x 10⁻⁶/K. Die Materialien haben Hauptkristallphasen vom Typ Hochquarzmischkristall oder Keatitmischkristall, die hauptsächlich aus den Komponenten Li₂O-Al₂O₃-SiO₂ aufgebaut sind. Die elektrische Isolation zwischen der Unterseite 2 der Glaskeramikplatte 10 und der Keramikschicht 20 erfolgt durch eine Schicht aus hoch isolierender Keramik.

Dabei haben sich Materialien wie Al₂O₃, Mullit, Cordierit, Zirkonsilikat und SiO₂/TiO₂-Legierungen bewährt. Diese Materialien haben jedoch eine hohe thermische Dehnung mit Werten von α 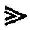 3 x 10⁻⁶/K. Damit der Schichtverbund Glaskeramikplatte 10 und Isolationsschicht 20 im Heizbetrieb beständig ist, muss neben einer guten Schichthaftung gleichzeitig das Auftreten von hohen Wärmespannungen vermieden werden. Dies wird durch einen Mechanismus sichergestellt, der auf einem chemischen Haftmechanismus zwischen der Keramikschicht 20 und der Glaskeramikplatte 10 und einer eingestellten Porosität des keramischen Schichtmaterials beruht. Durch die Porosität wird der E-Modul der Schicht gesenkt, die Schichten werden quasiduktil.

Untersuchungen haben auch gezeigt, dass die Isolationsschicht 20 nicht flächig an der Unterseite der Glaskeramikschicht 10 haftet. Im Interface bilden sich dünne Stege von Keramikpartikeln mit Breiten von etwa 50 bis 150 nm aus, die für die Verbindung verantwortlich sind, wie der vergrößerte Teilschnitt nach Fig. 2 mit dem Bezugszeichen 21 erkennen lässt. Im Bereich der Poren 22 besteht kein Kontakt zwischen Glaskeramik und Isolation. Diese nicht flächige Anbin-dung reduziert die Eigenspannungen des Systems. Durch diesen Mechanismus wird eine Delamination des Schichtverbundes im Kochbetrieb vermieden. Zudem wird die Verwölbung der Glaskeramikplatte 10 im Bereich einer Kochzone durch die sich stärker ausdehnende Isolationsschicht 20 minimiert, so dass Werte < 0,2 mm über die Diagonale der Kochzone erreicht werden. Damit lässt sich eine hohe Kochperformance des Kochsystems realisieren.

Die Heizelemente 30 können durch Siebdruck oder im thermischen Spritzen, insbesondere im atmosphärischen Plasmaspritzen oder Kaltgasspritzen aufgebracht werden. Im Siebdruckverfahren bestehen die Heizelemente 30 vorzugsweise aus Ag/Pd-haltigen Pasten mit Glasfritte oder im Fall von thermischem Spritzen aus NiCr-Basistegierungen, NiAl-Basislegierungen, CrFeAl-Basislegierungen oder oxidationsbeständigen Cermets, wie Cr₃C₂-NiCr oder WC-CoCr.

Die chemische Anbindung der Keramikschicht 20 entsteht durch Teilchendiffusion im Interface Keramik/Glaskeramik im Bereich der Stege. Überraschender Weise hat sich bei eigenen Untersuchungen gezeigt, dass allein die Verwendung von Glaskeramiken mit Hauptkristallphasen Hochquarzmischkristall aus den Komponenten Li₂O-Al₂O₃-SiO₂, auch als LAS-Glaskeramiken bezeichnet und bekannt unter dem Namen Ceran, die beschriebene notwendige chemische Anbindung zu der Keramikschicht 20 ermöglicht. Die Ursache liegt in der chemischen Verwandtschaft von der Glaskeramik und den Isolierstoffen. Letztere bestehen hauptsächlich aus den Verbindungen SiO₂ und Al₂O₃ mit Zusätzen von MgO und TiO₂. Bei der chemischen Anbindung findet eine Grenzflächendiffusion statt. Es kommt zu einem Austausch dieser Elemente, sowohl von der Glaskeramikseite, als auch von der Keramikseite. Bei anderen Stoffpaarungen entsteht während der Diffusion im Interface eine Reaktions-schicht in der Glaskeramik, die einen erhöhten thermischen Ausdehnungs-koeffzienten hat. Durch die induzierten mechanischen Spannungen bilden sich Mikrorisse aus, die zu einer Erniedrigung der Stoßfestigkeit des Gesamtsystems führen bis auf Werte, die unterhalb den Normanforderungen liegen. Ebenfalls ist eine schlechte Anbindung der Schichten und eine daraus folgende Delamination beim Aufheizen zu beobachten. Im Fall der Verwendung von Glaskeramiken mit höherem thermischen Ausdehnungskoeffizienten zeigte sich ebenfalls der beschriebene positive Effekt. Gegenüber LAS-Glaskeramiken wird die Hauptkristallphase als Keatitmischkristall ausgebildet, wodurch sich unter anderem der thermische Ausdehnungeskoeffizient auf etwa α = 1,5 x 10⁻⁶/K erhöht. Der Dehnungsunterschied zur Keramikschicht 20 wird so minimiert.

Eine Glaskeramikplatte 10 als Kochfläche für das beschriebene Kochsystem vereint also die einstückige Oberfläche mit hoher optischer Anmutung und Reinigungsfreundlichkeit mit einer Möglichkeit zum direkten Auftrag eines dauerhaft beständigen Schichtsystems zur Beheizung. Die Installation hoher Heizleistungen bei gleichzeitig vorhandener Planität der Kochzonen bewirkt eine erhebliche Steigerung der Kochleistungen im Vergleich zu herkömmlichen Kochsystemen.

## Patentansprüche

1. Kochsystem, das auf dem Prinzip der Wärmeleitung basiert und eine einstückige Kochfläche aus Glaskeramik umfasst, die mindestens eine Kochzone aufweist, die mittels auf der Unterseite der Glaskeramikplatte angeordneten Heizelementen individuell direkt beheizbar ist,
**dadurch gekennzeichnet,**
**dass** die Glaskeramikplatte mit Hauptkristallphasen vom Typ Hochquarzmischkristall oder Keatitmischkristall, hauptsächlich aufgebaut aus den Komponenten Li₂-Al₂O₃-SiO₂, mit einem Ausdehnungskoeffizienten von α = O bis 1,8 x 10⁻⁶/K und einer Wärmeleitfähigkeit < 3 W/mK besteht und auf der Unterseite mindestens eine Kochzone aufweist,
**dass** die Heizelemente (30) der Kochzonen aus metallischen Schichten bestehen und
**dass** zwischen der Unterseite (11) der Glaskeramikplatte (10) als elektrische Isolationsschicht (20) eine poröse Keramikschicht angeordnet ist.

2. Kochsystem nach Anspruch 1,
**dadurch gekennzeichnet,**
**dass** der Ausdehnungskoeffizient α = 0 bis 1,5 x 10⁻⁶/K beträgt

3. Kochsystem nach Anspruch 1 oder 2,
**dadurch gekennzeichnet,**
**dass** die Wärmeleitfähigkeit einem Wert < 2,7 W/mK einnimmt

4. Kochsystems nach den Ansprüchen 1 bis 3,
**dadurch gekennzeichnet,**
**dass** bei einem Kochbetrieb mit T = 550° C die Kochzone in der Diagonalen eine Verwölbung < 0,2 mm aufweist.

5. Kochsystem nach den Ansprüchen 1 bis 4,
**dadurch gekennzeichnet,**
**dass** die Heizelemente (30) im thermischen Spritzen, insbesondere atmosphärischen Plasmaspritzen oder Kaltgasspritzen aus NiCr-Basislegierungen, NiAl-Basislegierungen, CrFeAl-Basislegierungen oder oxidationsbeständigen Cermets, wie Cr₃C₂-NiCr oder WC-CoCr, aufgebracht sind.

6. Kochsystem nach den Ansprüchen 1 bis 4,
**dadurch gekennzeichnet,**
**dass** die Heizelemente (30) im Siebdruckverfahren aus Ag/Pd-haltigen Pasten mit einer Glasfritte aufgebracht sind.

7. Kochsystem nach einem der Ansprüche 1 bis 6,
**dadurch gekennzeichnet,**
**dass** die als elektrische Isolationsschicht (20) verwendete Keramikschicht aus Al₂O₃, Mullit, Cordierit, Zirkonsilikat oder SiO₂/TiO₂ besteht.

8. Kochsystem nach einem der Ansprüche 1 bis 7,
**dadurch gekennzeichnet,**
**dass** die Isolationsschicht (20) mittels dünner Stege (21) von Keramikprimärpartikeln mit einer Breite von etwa 50 bis 150 nm an der Unterseite (12) der Glaskeramikplatte (10) angebunden sind.

9. Kochsystem nach einem der Ansprüche 1 bis 8,
**dadurch gekennzeichnet,**
**dass** die Heizelemente (30) mittels einer thermischen Isolationsschicht (40) aus silikatischem Fasermaterial abgedeckt sind.

10. Kochsystem nach einem der Ansprüche 1 bis 9,
**dadurch gekennzeichnet,**
**dass** die Glaskeramikplatte (10) einen spezifischen Widerstand> 10⁶ Ω cm und das gesamte Kochsystem eine Durchschlagfestigkeit > 3750 V nach 60335-1 aufweisen, während der Ableitstrom nach der Norm 60335-1 < 0,25 mA pro Kochzone beträgt.

## Revendications

1. Système de cuisson qui est basé sur le principe de la conduction de la chaleur et qui comprend une surface de cuisson d'un seul tenant en vitrocéramique, qui présente au moins une zone de cuisson qui peut être chauffée directement de manière individuelle au moyen d'éléments chauffants disposés sur la face inférieure de la plaque vitrocéramique, **caractérisé en ce que** la plaque vitrocéramique, principalement fabriquée avec des phases cristallines principales du type de solution solide dé quartz bêta ou de solution solide de kéatite, est constituée des composants Li₂-Al₂O₃-SiO₂ présentant un coefficient de dilatation de α = 0 à 1,8x10⁻⁶/K et une conductibilité thermique < 3 W/mK, et comporte au moins une zone de cuisson sur la face inférieure, **en ce que** les éléments chauffants (30) des zones de cuisson se composent de couches métalliques, et **en ce qu'**une couche céramique poreuse est disposée entre la face inférieure (11) de la plaque vitrocéramique (10) en guise de couche d'isolation électrique (20).

2. Système de cuisson selon la revendication 1, **caractérisé en ce que** le coefficient de dilatation vaut α = 0 à 1,5x10⁻⁶/K.

3. Système de cuisson selon la revendication 1 ou 2, **caractérisé en ce que** la conductibilité thermique a une valeur < 2,7 W/mK.

4. Système de cuisson selon les revendications 1 à 3, **caractérisé en ce que**, pour une opération de cuisson avec T = 550°C, la zone de cuisson présente en diagonale une courbure < 0,2 mm.

5. Système de cuisson selon les revendications 1 à 4, **caractérisé en ce que** les éléments chauffants (30) sont déposés par projection à chaud, en particulier par projection atmosphérique au plasma ou par projection au gaz froid, à partir d'alliages à base de NiCr, d'alliages à base de NiAl, d'alliages à base de CrFeAl ou de cermets résistants à l'oxydation, comme le Cr₃C₂₋NiCr ou le WC-CoCr.

6. Système de cuisson selon les revendications 1 à 4, **caractérisé en ce que** les éléments chauffants (30) sont déposés par sérigraphie à partir de pâtes contenant Ag/Pd avec une fritte de verre.

7. Système de cuisson selon l'une quelconque des revendications 1 à 6, **caractérisé en ce que** la couche céramique utilisée comme couche d'isolation électrique (20) se compose de Al₂O₃, de mullite, de cordiérite, de silicate de zirconium ou de SiO₂/TiO₂.

8. Système de cuisson selon l'une quelconque des revendications 1 à 7, **caractérisé en ce que** la couche d'isolation (20) est attachée à la face inférieure (12) de la plaque vitrocéramique (10) au moyen de fines nervures (21) de particules primaires de céramique avec une largeur d'environ 50 à 150 nm.

9. Système de cuisson selon l'une quelconque des revendications 1 à 8, **caractérisé en ce que** les éléments chauffants (30) sont recouverts au moyen d'une couche d'isolation thermique (40) en matière fibreuse au silicate.

10. Système de cuisson selon l'une quelconque des revendications 1 à 9, **caractérisé en ce que** la plaque vitrocéramique (10) présente une résistance spécifique > 10⁶ Ω·cm et le système de cuisson global présente une tension de claquage > 3750 V selon 60335-1, tandis que le courant de fuite selon la norme 60335-1 est < 0,25 mA par zone de cuisson.

## Claims

1. Cooking system which is based on the principle of heat conduction and comprises a single-piece cooking plate made from glass-ceramic, which has at least one cooking zone that can be directly heated individually by means of heating elements arranged on the underside of the glass-ceramic plate, **characterized in that** the glass-ceramic plate comprises primary crystal phases of the beta-quartz solid solution or keatite solid solution type, predominantly composed of the components Li₂-Al₂O₃-SiO₂, with an expansion coefficient of α = 0 to 1.8 x 10⁻⁶/K and a thermal conductivity of < 3 W/mK, and has at least one cooking zone on the underside, **in that** the heating elements (30) of the cooking zones comprise metallic layers, and **in that** a porous ceramic layer is arranged between the underside (11) of the glass-ceramic plate (10) as an electrical insulation layer (20).

2. Cooking system according to Claim 1, **characterized in that** the expansion coefficient is α = 0 to 1.5 x 10⁻⁶/K.

3. Cooking system according to Claim 1 or 2, **characterized in that** the thermal conductivity adopts a value of < 2.7 W/mK.

4. Cooking system according to Claims 1 to 3, **characterized in that** during cooking operation at T = 550°C, the cooking zone has a diagonal bow of < 0.2 mm.

5. Cooking system according to Claims 1 to 4, **characterized in that** the heating elements (30) are applied by thermal spraying, in particular atmospheric plasma spraying or cold gas spraying, from NiCr base alloys, NiAl base alloys, CrFeAl base alloys or oxidation-resistant cermets, such as Cr₃C₂-NiCr or WC-CoCr.

6. Cooking system according to Claims 1 to 4, **characterized in that** the heating elements (30) are applied by the screen-printing process from Ag/Pd-containing pastes with a glass frit.

7. Cooking system according to one of Claims 1 to 6, **characterized in that** the ceramic layer used as the electrical insulation layer (20) consists of Al₂O₃, mullite, cordierite, zirconium silicate or SiO₂/TiO₂.

8. Cooking system according to one of Claims 1 to 7, **characterized in that** the insulation layer (20) is attached to the underside (12) of the glass-ceramic plate (10) by means of thin ribs (21) of ceramic primary particles with a width of approximately 50 to 150 nm.

9. Cooking system according to one of Claims 1 to 8, **characterized in that** the heating elements (30) are covered by means of a thermal insulation layer (40) of silicate fibre material.

10. Cooking system according to one of Claims 1 to 9, **characterized in that** the glass-ceramic plate (10) has a resistivity of > 10⁶ Ωcm and the overall cooking system has a dielectric strength of > 3750 V in accordance with 60335-1, while the discharge current according to standard 60335-1 is < 0.25 mA per cooking zone.
